# EUROPEAN PATENT SPECIFICATION

(11) **EP 0 515 735 B1**
(45) Date of publication and mention of the grant of the patent: **28.06.1995**
(21) Application number: 91201266.3
(22) Date of filing: 28.05.1991
(51) Int. Cl.: B60K 15/04

(54) **Fuel tank assembly for a vehicle**
Kraftstofftankanordnung für ein Fahrzeug
Assemblage de réservoir à carburant liquide pour véhicule

(43) Date of publication of application: 02.12.1992
(73) Proprietor: NEW HOLLAND U.K. LIMITED, Basildon, Essex SS14 3AD (GB)
(72) Inventor: Martenas, Wayne Bruce, Basildon, Essex (GB); Wilkins, Geoffrey, Corringham, Essex (GB)
(74) Representative: Vandenbroucke, Alberic

(56) References cited:
- EP-A- 0 245 613
- DE-A- 3 544 782
- FR-A- 2 435 367
- PATENT ABSTRACTS OF JAPAN, vol. 9, no. 187 (M-401)(1910), 3 August 1985 & JP-A-60 053 428

## Description

This invention relates to a fuel tank assembly for a vehicle. The invention has been conceived in relation to an agricultural tractor but it is to be understood that the invention is applicable to a fuel tank assembly for any vehicle.

In agricultural tractors, it is common to have the opening of a fuel tank filler neck disposed generally close to, if not actually flush with, a panel of the tractor bodywork such that, if there is any spillage of fuel resulting from a misguided entry of fuel or from backflow, the spilled fuel is spread over the adjacent panel and will run down the latter and on to any adjacent components. The immediate disadvantage of this is that the film of fuel on the panel and other components quickly attracts dust and dirt, and other foreign matter, which is unsightly. In some instances, the fuel tank is located close to the engine so that there can be a danger of any spilled fuel reaching the hot engine which is clearly undesirable. Furthermore, in some instances the fuel tank is mounted forwardly of the radiator of the engine cooling system and the spilled fuel may be sucked into the radiator by the fan which is conventionally provided to draw cooling air through the radiator. This is also a grave disadvantage inasmuch as the fuel on the radiator will also attract dust and dirt and this could eventually lead to a blockage of the radiator with possible overheating of the engine. Furthermore, with such an arrangement, it is possible for the spilled fuel to be sucked through the radiator and thrown out from the outlet side of the fan on to the windscreen of the cab. Again, the film of fuel on the windscreen will attract dust and dirt and thus impair the visibility of the operator.

According to the present invention there is provided a vehicle comprising a base structure and bodywork and a fuel tank assembly mounted thereon; said fuel tank assembly comprising a fuel tank having a filler neck, access to the inlet of which is gained through an aperture in a panel forming part of said bodywork and said vehicle being characterised in that said fuel tank assembly further also comprises a grommet having a skirt at one end and adapted to encircle said filler neck, at least one flange at the other end and adapted to engage the edge portion of said aperture in said panel and an overflow channel disposed between said flange and said skirt and surrounding said inlet of said filler neck; said overflow channel being provided with an outlet adapted for connection to a drain pipe. Preferably, the grommet comprises a pair of spaced-apart flanges at said outer end and which are adapted to receive the edge portion of said aperture in said panel in the space therebetween.

Thus in accordance with the present invention, any fuel which is misdirected into the inlet of the filler neck and/or backflows from the filler neck will tend to collect in the overflow channel and be drained therefrom to ground through the drain pipe, whereby the adjacent bodywork of the vehicle and/or the cooling radiator and/or other components are kept free from spilled fuel, whereby the disadvantages discussed above are avoided.

Conveniently, the filler neck and the grommet are cylindrical and the outer diameter of the body of a conventional filler cap for closing the filler tube is preferably dimensioned so that this body of the filler cap substantially closes the entrance to the overflow channel in the grommet, when in position, thereby denying access to dust and dirt which would otherwise be attracted to any fuel remaining in said overflow channel. The grommet is conveniently made of a synthetic plastics material which provides a good seal with respect to the filler neck and the adjacent panel of the vehicle bodywork as well as being resistant to petrol or diesel fuel.

In the case of agricultural vehicles, for example tractors, the fuel tank often needs refilling in the field or away from the tractor depot and this often is being accomplished by the use of a jerrycan or other container of fuel, the fuel being poured from the jerrycan into the filler neck of the fuel tank. This is one instance where the fuel may well be misdirected into the filler neck and thus be spilled. To help avoid spillage in these circumstances, it is clearly desirable to have as large a filler neck as possible in order to accommodate the less well defined flow of fuel from a jerrycan or other container. However, a filler neck with an enlarged inlet is not convenient when the fuel tank is filled using a conventional filler nozzle attached to the end of a fuel pipe in turn attached to a fuel reservoir. If the filler nozzle is hand held, then an enlarged filler neck does not give rise to any problems but if it is required to leave the nozzle on auto-fill, then a problem does arise because the enlarged filler neck does not allow the filler nozzle to be positively retained, with the resultant likelihood of the nozzle jumping out of the filler neck and thereby wasting considerable amounts of fuel.

Therefore, the filler neck of the fuel tank comprises an outer portion of a first cross-sectional area, and an adjacent inner portion of a second cross-sectional area which is less than the first cross-sectional area.

Thus, this hybrid construction of a filler neck neatly accommodates both the filling of the fuel tank manually from a container such as a jerrycan and the filling of the fuel tank using a conventional fuel nozzle, which nozzle can be retained in the inner portion of the filler neck so that the auto-fill technique can be employed. A conventional filler neck usually has a diameter of the order of 40 mm which snugly accommodates a conventional fuel filler nozzle. However, in the embodiments according to the present invention, the inlet end of the outer portion of the filler neck has an inner diameter of the order of 100 mm, thus providing a considerably enlarged fuel inlet. The inner and outer portions of the filler neck may be integral or separate and the inner portion may be cup-shaped with the bottom of the cup provided with an aperture dimensioned to snugly receive a fuel nozzle and thus typically of the order of 40 mm in diameter. One or more vent apertures may be provided in the side wall of the inner portion of the filler neck and conveniently, these are also dimensioned so as to be capable of receiving and retaining a fuel nozzle. To this end, it is more convenient if the inner portion of the filler neck is of frusto conical shape in order to present the vent apertures at a better angle for receiving the fuel nozzle.

The present invention will now be described in greater detail, by way of example, with reference to the accompanying drawings in which :
Figure 1 is a side view of a tractor embodying the present invention,

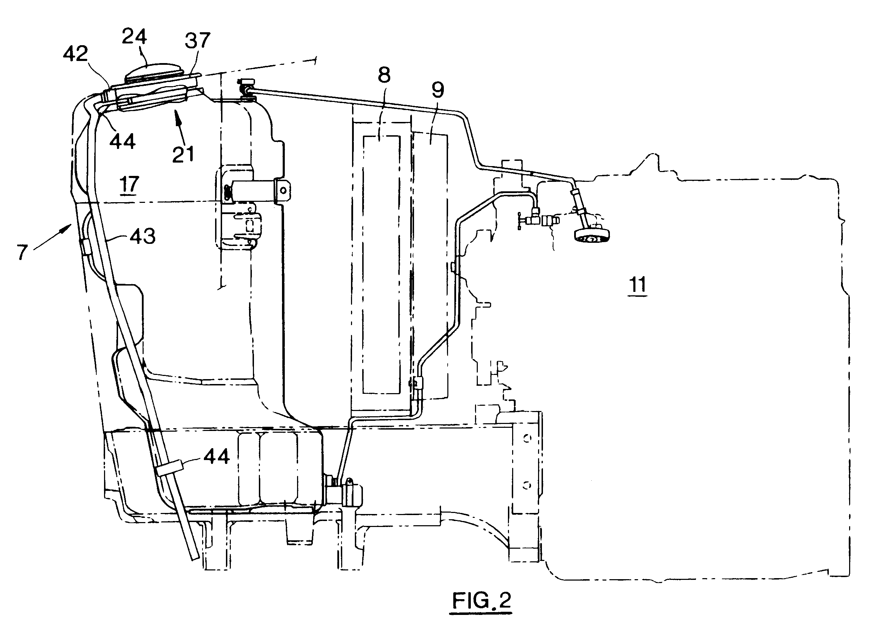

Figure 2 is an enlargement of a portion of Figure 1, with certain parts broken away,
Figure 3 is an enlarged cross-sectional view of part of Figure 2, and
Figure 4 is a cross-sectional view of an alternative to a component shown in Figure 3.

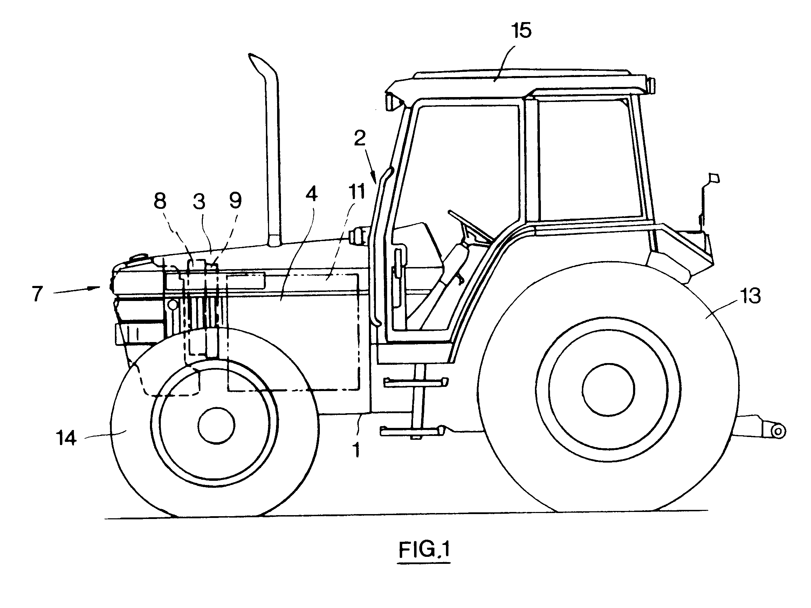

Referring first to Figure 1, this illustrates a tractor comprising a base structure 1 on which is mounted bodywork 2 including panelwork 3 forming the top of an engine compartment cover; this cover being completed by two side panels 4 which are provided adjacent to the top panel 3. The engine compartment contains a fuel tank assembly 7 mounted at the front end of the compartment, a radiator 8 forming part of an engine cooling system and mounted next to, and rearwardly of, the fuel tank assembly 7, a fan assembly 9 operable to draw cooling air through the radiator 8 and disposed adjacent, and rearwardly of, the latter, and an engine 11 mounted rearwardly of the fan assembly 9. The engine 11 is associated with a drive transmission through which a pair of rear, ground-engaging wheels 13 are driven. The tractor also comprises a pair of front, steerable, ground-engaging wheels 14 and an operator cab 15.

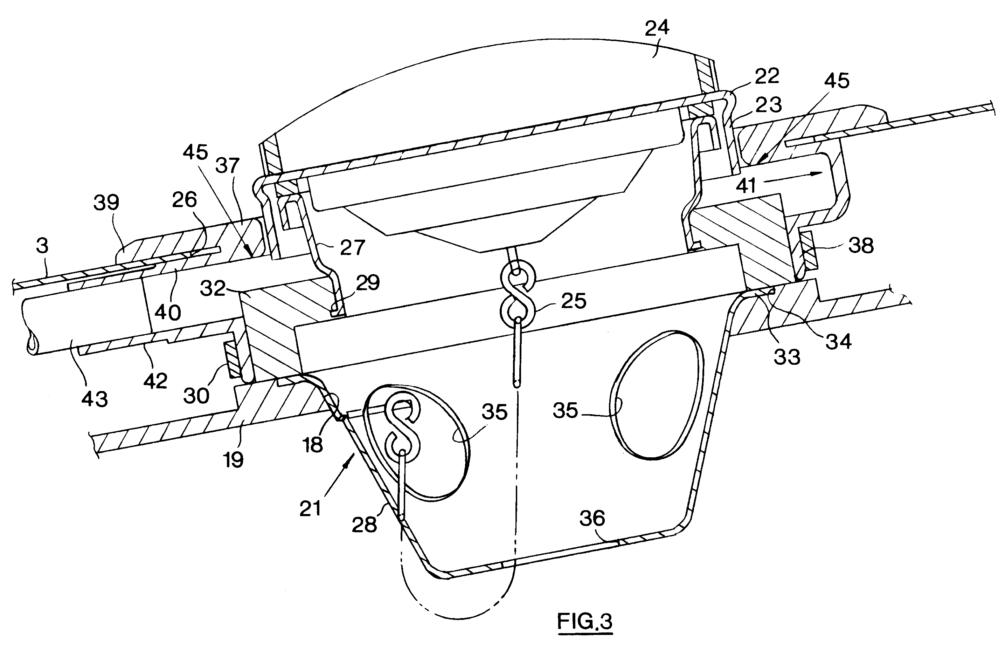

In accordance with the present invention, the fuel tank assembly 7 comprises a fuel tank 17 which may be moulded from a synthetic plastics material. As best seen in Figure 3, the fuel tank 17 is provided with a fuel inlet by way of an aperture 18 in its top wall 19. Fitted in the fuel inlet aperture 18 is a filler neck or tube 21, the outer inlet end of which releasably receives a filler cap 22 of conventional design and having a peripheral skirt 23 which extends around and downwardly of the filler tube inlet. The filler cap 22 is provided with a central upstanding member 24 to enable manual fitting and release of the cap to the filler tube 21. A chain 25 is connected between the filler cap 22 and the filler tube 21 in order to hold captive this filler cap 22 when removed from said filler tube 21.

The filler tube 21 extends through an aperture 26 in the top panel 3 of the engine compartment cover and comprises an outer, generally cylindrical portion 27 and a separate inner and generally conical cup-shaped portion 28. The outer portion 27 is stepped so that the diameter of the inner end thereof is less than that of the outer end thereof; this inner end being provided with an out-turned flange 29 which is received in a corresponding annular slot or channel in a collar 32 composed of a synthetic plastics material. The inner portion 28 of the filler tube 21 has an out-turned flange 33 which sits in a counter-bore 34 in the fuel inlet aperture 18 in the top wall 19 of the fuel tank 17. The collar 32 may be bonded or otherwise secured to the top wall 19 of the fuel tank 17, whereby the overall filler tube 21 comprising the inner and outer portions 28 and 27 is secured in position relative to the fuel tank 17. Vent apertures 35 are provided in the side wall of the inner portion 28 of the filler tube 21; the diameter of these vent apertures 35 generally being the same as a fuel inlet aperture 36 provided in the bottom of the cup-shaped inner portion 28 of the filler tube 21. It will be seen that the tapered side wall of the inner portion 28 of the filler tube 21 presents the vent apertures 35 at an angle relative to the longitudinal axis of the filler tube 21.

The fuel tank assembly 7 also comprises a generally cylindrical grommet 37 comprising an annular skirt 38 at one end, which skirt 38 encircles the collar 32 of the filler tube 21 and is secured thereto by a hose clamp 30, or similar device, shown only in Figure 3 of the drawings. The grommet 37 is composed of a flexible, synthetic plastics material which lends itself to a sealing engagement with the collar 32 when clamped thereon. At the other end of the grommet 37 there are provided a pair of spaced flanges 39 and 40; the space between these two flanges receiving the edge portion of the aperture 26 in the top panel 3 in conventional grommet fashion. Disposed between the flanges 39 and 40 and the skirt 38 is an overflow channel 41 which is annular in shape with the side thereof facing the filler tube 21 being open. In the wall of the overflow channel 41 opposite the open side, there is provided a drain outlet 42 in the form of a cylindrical extension which receives internally a drain pipe 43. In order to drain any spilled fuel as quickly as possible, it is desirable to maximise the internal diameter of the drain pipe 43 and in the illustrated embodiment, this dimension is 15 mm. The drain pipe 43 is in the form of a flexible hose which is routed from the outlet 42 across the top of the fuel tank 17 and down one side thereof so that the outlet end of the pipe 43 is generally adjacent the ground to which spilled fuel is discharged. The drain pipe 43 is held in position by clips 44.

It will be seen that the top panel 3 of the engine compartment cover is inclined and hence the grommet 37, when fitted, also is inclined. The outlet 42 of overflow channel 41 is disposed so as to be at the lowest part of the grommet 37 when the latter is assembled on the filler tube 21. Thus, any spilled fuel will readily drain from the overflow channel 41 to the drain pipe 43.

In use, the filler cap 22 is removed from the outer filler tube portion 27 but held captive by the chain 25. The fuel tank is then replenished with fuel either by way of using a fuel filler nozzle connected to the end of a hose which in turn is connected to a reservoir of fuel and, in this case, the nozzle may be placed either in the aperture 36 in the inner portion 28 of the filler tube 21 or in one of the vent apertures 35, if such are presented so as to receive the fuel nozzle. In either of these ways, the fuel nozzle is positively retained in position and can be left on auto-fill without fear of the nozzle becoming dislodged. With the filler cap 22 removed, it will be seen that the overflow channel 41 of the grommet 37, in fact, forms part of an overall overflow channel indicated generally at 45 and defined, on one side, by the overflow channel 41 of the grommet 37 and, on the other, by the outer wall of the outer filler tube portion 27 and the top wall or surface of the collar 32. Thus, should any fuel spill out from the outer filler tube portion 27, it will be received in the overall overflow channel 45, gather in the grommet overflow channel 41 and drain to ground through the drain pipe 43. This will also happen if overflow or spillage takes place due to the use of a jerrycan in order to replenish fuel in the fuel tank 17. However, the risk of spillage is much reduced when using this method because of the enlarged filler tube inlet presented by the outer portion 27 of the filler tube 21.

When the fuel tank 17 has been replenished, the filler cap 22 is replaced and it will be seen that the cap 22 is dimensioned so as substantially to close the entrance to the overall overflow channel 45 and thus at least substantially restrict if not prevent the ingress of dust and dirt which would otherwise be attracted to the film of fuel inevitably remaining in the channel 45 with the possibility eventually of the drain outlet 42 becoming blocked.

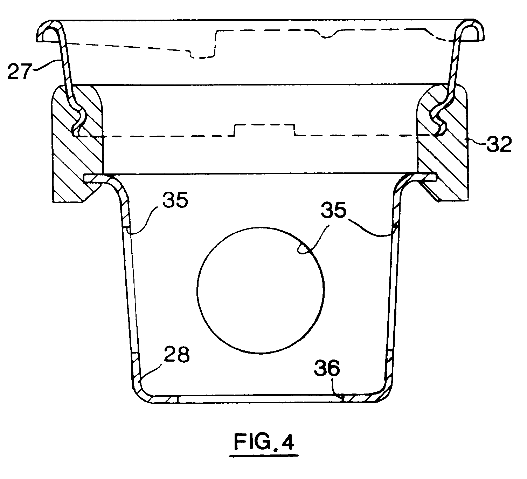

Turning now to Figure 4, this illustrates an alternative construction of filler tube 21 in which both the outer and inner portions 27 and 28 are moulded into the collar 32 and the collar 32 itself is bonded to the top 19 of the fuel tank 17 around the fuel inlet aperture 18 therein. It has been found that this is a more convenient filler tube construction to handle from the assembly point of view. The skirt 38 of the grommet 37 (not shown in Figure 4) again is clamped around the collar 32.

It will be seen that in this alternative arrangement, the taper on the inner portion 28 of the filler tube 21 is less severe than that illustrated in Figure 3, whereby the vent apertures 35 are not so well presented for the reception of a fuel supply nozzle although this will depend upon the construction of the fuel supply nozzle.

It will be seen that the present invention provides a simple but highly effective means of significantly reducing the risk of fuel overflowing on to the bodywork of the vehicle should spillage occur, thus avoiding unsightly films of fuel which gather dust and dirt. More importantly, in the illustrated embodiment in which the fuel tank 17 is disposed forwardly of the radiator 8 of the cooling system for the engine 11, the invention equally significantly reduces the risk of any spilled fuel, which otherwise might reach the inside of the engine compartment cover, to be sucked through the radiator 8 by the fan 9 and blown on to the windscreen of the cab 15. Consequently, dust and dirt, which inevitably also are drawn in with the air, have a substantially lesser tendency to collect on the core of the radiator 8 which otherwise could, in due course, lead to a blockage of the latter with consequential overheating of the engine. Also, the risk of dust and dirt being attracted to a film of fuel on the windscreen, which, of course, would severely impair the visibility of the operator, equally has been reduced very substantially with the present invention.

## Claims

1. A vehicle comprising a base structure (1) and bodywork (3) and a fuel tank assembly (7) mounted on said base structure; said fuel tank assembly (7) comprising a fuel tank (17) having a filler neck (21), access to the inlet of which is gained through an aperture (26) in panelwork (3) forming part of said bodywork (3) and said vehicle being characterised in that said fuel tank assembly (7) further comprises a grommet (37) having a skirt (38) at one end and adapted to encircle said filler neck (21), at least one flange (39) at the other end and adapted to engage the edge portion of said aperture (26) in said panel (3), and an overflow channel (45) disposed between said flange (39) and said skirt (38) and surrounding said inlet of said filler neck (21); said overflow channel (45) being provided with an outlet (42) adapted for connection to a drain pipe (43).

2. A vehicle according to claim 1, characterised in that the fuel tank assembly (7) further also comprises a filler cap (22) for closing the filler neck (21); said filler cap (22) being dimensioned so as, when in position, substantially to close the entrance to the overflow channel (45) in the grommet (37) to thereby deny access of foreign matter to said overflow channel (45).

3. A vehicle according to claim 1 or 2, characterised in that the skirt (38) of the grommet (37) is attached to the filler tube (21) by a hose clamp (30).

4. A vehicle according to any of the preceding claims characterised in that the grommet (37) comprises a pair of spaced-apart flanges (39) at said other end and which are adapted to receive said edge portion of said aperture (26) in said panel (3) in the space therebetween.

5. A vehicle according to any of the preceding claims, characterised in that the filler neck (21) has an outer portion (27) of a first cross-sectional area and an adjacent inner portion (28) of a second cross-sectional area; the second cross-sectional area being less than the first cross-sectional area.

6. A vehicle according to claim 5, characterised in that the inner and outer portions (27, 28) of the filler neck (21) are integral.

7. A vehicle according to claim 5, characterised in that the outer and inner portions (27, 28) of the filler neck (21) are formed separately.

8. A vehicle according to claim 7, characterised in that the outer portion (27) of the filler neck (21) is attached to a collar (32) of a synthetic plastics material; in that the inner portion (28) of said filler neck (21) is received in a counter-bore (34) in a fuel inlet aperture (18) of the fuel tank (17); in that the fuel tank (17) is composed of a synthetic plastics material and in that the collar (32) is bonded to the fuel tank (17) around the fuel inlet aperture (18) thereof.

9. A vehicle according to claim 7, characterised in that the outer and inner portions (27, 28) of the filler neck (21) are attached to a collar (32) composed of a synthetic plastics material; in that the fuel tank (17) is also composed of a synthetic plastics material and in that the collar (32) is bonded to the fuel tank (17) around the fuel inlet aperture (18) thereof.

10. A vehicle according to any of claims 7 to 9, characterised in that the outer and inner portions (27, 28) of the filler neck (21) are each tapered.

11. A vehicle according to any of claims 7 to 10, characterised in that the inner portion (28) of the filler neck (21) is cup-shaped with the open end thereof facing the outer portion (27) of said filler neck (21) and with a fuel inlet aperture (36) being provided in the bottom of the cup.

12. A vehicle according to claim 11, characterised in that the fuel inlet aperture (36) of the inner portion (28) of the filler neck (21) is dimensioned so as, in use, snugly to receive a fuel filler nozzle connected to a fuel reservoir.

13. A vehicle according to any of claims 7 to 12, characterised in that the side wall of the inner portion (28) of the filler neck (21) is provided with at least one vent aperture (35) through which air expelled from the fuel tank (17) when the latter is filled with fuel, can flow.

14. A vehicle according to claim 13, characterised in that the, or at least one of the vent apertures (35) in the inner portion (28) of the filler neck (21) is dimensioned so as, in use, snugly to receive a fuel filler nozzle of a fuel hose connected to a fuel reservoir.

## Patentansprüche

1. Fahrzeug mit einem Fahrgestell (1) und einer Karosserie (3) und einer Kraftstofftankanordnung (7), die auf dem Fahrgestell befestigt ist, wobei die Kraftstofftankanordnung (7) einen Kraftstofftank (17) mit einem Füllstutzen (21) aufweist, dessen Einlaß über eine Öffnung (26) in einer Verkleidung (3) zugänglich ist, die einen Teil der Karossierie (3) bildet, und wobei das Fahrzeug dadurch gekennzeichnet ist, daß die Kraftstofftankanordnung (7) weiterhin eine Durchführungshülse (37) mit einer an einem Ende angeordneten Schürze (38), die so ausgebildet ist, daß sie den Füllstutzen (21) umgibt, mit zumindestens einem Flansch (39) am anderen Ende, der so ausgebildet ist, daß er mit dem Randteil der Öffnung (26) in der Verkleidung (3) in Eingriff kommt, und mit einem Überlaufkanal (45) umfaßt, der zwischen dem Flansch (39) und der Schürze (38) angeordnet ist und den Einlaß des Füllstutzens (21) umgibt, wobei der Überlaufkanal (45) mit einem Auslaß (42) versehen ist, der für eine Verbindung mit einem Ablaufrohr (43) ausgebildet ist.

2. Fahrzeug nach Anspruch 1, dadurch gekennzeichnet, daß die Kraftstofftankanordnung (7) weiterhin einen Verschlußdeckel (22) zum Verschließen des Füllstutzens (21) umfaßt, daß der Verschlußdeckel (22) so bemessen ist, daß, wenn er sich an seinem Platz befindet, er im wesentlichen den Eingang an den Überlaufkanal (45) in der Durchführungshülse (37) verschließt, um auf diese Weise den Eintritt von Fremdkörpern in den Überlaufkanal (459 zu verhindern.

3. Fahrzeug nach Anspruch 1 oder 2, dadurch gekennzeichnet, daß die Schürze (38) der Durchführungshülse (37) an dem Füllstutzen (21) über einen Schlauchbinder (30) befestigt ist.

4. Fahrzeug nach einem der vorhergehenden Ansprüche, dadurch gekennzeichnet, daß die Durchführungshülse (37) zwei mit Abstand voneinander angeordnete Flansche (39) an dem anderen Ende aufweist, wobei diese Flansche so ausgebildet sind, daß sie den Randteil der Öffnung (26) in der Verkleidung (3) in dem Raum zwischen diesen Flanschen aufnehmen.

5. Fahrzeug nach einem der vorhergehenden Ansprüche, dadurch gekennzeichnet, daß der Füllstutzen (21) einen äußeren Abschnitt (27) mit einer ersten Querschnittsfläche und einen benachbarten inneren Abschnitt (28) mit einer zweiten Querschnittsfläche aufweist, und daß die zweite Querschnittsfläche kleiner als die erste Querschnittsfläche ist.

6. Fahrzeug nach Anspruch 5, dadurch gekennzeichnet, daß die inneren und äußeren Abschnitte (27, 28) des Füllstutzens (21) einstückig ausgebildet sind.

7. Fahrzeug nach Anspruch 5, dadurch gekennzeichnet, daß die äußeren und inneren Abschnitte (27, 28) des Füllstutzens (21) getrennt ausgebildet sind.

8. Fahrzeug nach Anspruch 7, dadurch gekennzeichnet, daß der äußere Abschnitt (27) des Füllstutzens (21) an einem Flanschring (23) aus Kunststoffmaterial befestigt ist, daß der innere Abschnitt (28) des Füllstutzens (21) in einer Senkbohrung (34) in Kraftstoff-Einlaßöffnung (18) des Kraftstofftanks (17) aufgenommen ist, daß der Kraftstofftank (17) aus Kunststoffmaterial besteht, und daß der Flanschring (32) mit dem Kraftstofftank (17) um dessen Kraftstoff-Einlaßöffnung (18) herum verbunden ist.

9. Fahrzeug nach Anspruch 7, dadurch gekennzeichnet, daß die äußeren und inneren Abschnitte (27, 28) des Füllstutzens (21) an einem aus Kunststoffmaterial bestehenden Flanschring (32) befestigt sind, daß der Kraftstofftank (17) ebenfalls aus einem Kunststoffmaterial besteht, und daß der Flanschring (32) mit dem Kraftstofftank (17) um dessen Kraftstoff-Einlaßöffnung (18) herum verbunden ist.

10. Fahrzeug nach einem der Ansprüche 7 bis 9, dadurch gekennzeichnet, daß die äußeren und inneren Abschnitte (27, 28) des Füllstutzens (21) jeweils verjüngt sind.

11. Fahrzeug nach einem der Ansprüche 7 bis 10, dadurch gekennzeichnet, daß der innere Abschnitt (28) des Füllstutzens (21) schalenförmig ausgebildet ist, wobei sein offenes Ende auf den äußeren Abschnitt (27) des Füllstutzens (21) gerichtet ist, und daß eine Kraftstoffeinlaßöffnung (36) im Boden der Schale vorgesehen ist.

12. Fahrzeug nach Anspruch 11, dadurch gekennzeichnet, daß die Kraftstoffeinlaßöffnung (36) des inneren Abschnittes (28) des Füllstutzens (21) so bemessen ist, daß sie im Gebrauch mit engem Sitz ein Kraftstoff-Füllhandstück aufnimmt, das mit einem Kraftstoffvorratsbehälter verbunden ist.

13. Fahrzeug nach einem der Ansprüche 7 bis 12, dadurch gekennzeichnet, daß die Seitenwand des inneren Abschnittes (28) des Füllstutzens (21) mit zumindestens einer Belüftungsöffnung (35) versehen ist, durch die aus dem Kraftstofftank (17) bei dessen Füllung mit Kraftstoff verdrängte Luft strömen kann.

14. Fahrzeug nach Anspruch 13, dadurch gekennzeichnet, daß die oder zumindestens eine der Belüftungsöffnungen (35) in dem inneren Abschnitt (28) des Füllstutzens (21) so bemessen ist, daß sie im Gebrauch mit engem Sitz ein Kraftstoff-Füllhandstück eines Kraftstoffschlauches aufnimmt, der mit einem Kraftstoffvoratsbehälter verbunden ist.

## Revendications

1. Véhicule comportant une structure de base (1), une carrosserie (3) et un réservoir à carburant (7) monté sur la dite structure de base ; le dit réservoir à carburant (7) comprenant un réservoir à carburant proprement dit (17) avec un goulot de remplissage (21), dont l'entrée est accessible par une ouverture (26) pratiquée dans le panneau (3) faisant partie de la dite carrosserie (3) et le dit véhicule étant caractérisé en ce que le dit réservoir à carburant (7) comporte également un oeillet (37) doté d'une jupe (38) à une extrémité et adapté pour encercler le dit goulot de remplissage (21), au moins une bride (39) à l'autre extrémité et adapté pour engager la portion latérale de la dite ouverture (26) dans le dit panneau (3), et un canal de trop-plein (45) disposé entre la dite bride (39) et la dite jupe (38) et entourant la dite entrée du dit goulot de remplissage (21) ; le dit canal de trop-plein (45) étant doté d'une sortie (42) adaptée pour être reliée à un tuyau d'évacuation (43).

2. Véhicule selon la revendication 1, caractérisé en ce que le réservoir à carburant (7) comporte aussi un bouchon de remplissage (22) pour fermer le goulot de remplissage (21) ; le dit bouchon de remplissage (22) étant dimensionné, lorsqu'il est en position, de manière à fermer effectivement l'entrée du canal de trop-plein (45) dans l'oeillet (37) de manière ainsi à interdire l'accès (45) du dit canal de trop-plein aux corps étrangers.

3. Véhicule selon la revendication 1 ou 2, caractérisé en ce que la jupe (38) de l'oeillet (37) est fixée à la tubulure de remplissage (21) par un collier de tuyau (30).

4. Véhicule selon l'une quelconque des revendications qui précèdent caractérisé en ce que l'oeillet (37) comporte une paire de brides espacées (39) à la dite autre extrémité et qui sont adaptées pour accueillir la dite portion latérale de la dite ouverture (26) dans le dit panneau (3), dans l'espace qui les sépare.

5. Véhicule selon l'une quelconque des revendications qui précèdent, caractérisé en ce que le goulot de remplissage (21) comporte une portion extérieure (27) d'une première superficie de la section et une portion intérieure adjacente (28) d'une seconde superficie de la section ; la seconde superficie de la section étant inférieure à la première superficie de la section.

6. Véhicule selon la revendication 5, caractérisé en ce que les portions extérieure et intérieure (27, 28) du goulot de remplissage (21) sont intégrales.

7. Véhicule selon la revendication 5, caractérisé en ce que les portions extérieure et intérieure (27, 28) du goulot de remplissage (21) sont formées séparément.

8. Véhicule selon la revendication 7, caractérisé en ce que la portion extérieure (27) du goulot de remplissage (21) est fixée à un collier (32) dans une matière plastique synthétique ; en ce que la portion intérieure (28) du dit goulot de remplissage (21) est accueillie dans un contre-alésage (34), dans une ouverture d'entrée du carburant (18) du réservoir du carburant (17) ; en ce que le réservoir à carburant (17) est composé d'une matière plastique synthétique et en ce que le collier (32) est collé au réservoir à carburant (17) autour de l'ouverture d'entrée du carburant (18) de ce dernier.

9. Véhicule selon la revendication 7, caractérisé en ce que les portions extérieure et intérieure (27, 28) du goulot de remplissage (21) sont fixées à un collier (32) composé de matière plastique synthétique ; en ce que le réservoir à carburant (17) est également composé de matière plastique synthétique et en ce que le collier (32) est collé au réservoir à carburant (17) autour de l'ouverture d'entrée du carburant (18) de ce dernier.

10. Véhicule selon l'une quelconque des revendications 7 à 9, caractérisé en ce que les portions extérieure et intérieure (27, 28) du goulot de remplissage (21) sont coniques dans chaque cas.

11. Véhicule selon l'une quelconque des revendications 7 à 10, caractérisé en ce que la portion intérieure (28) du goulot de remplissage (21) est en forme de cuvette, l'extrémité ouverte de celle-ci faisant face à la portion extérieure (27) du dit goulot de remplissage (21), une ouverture d'entrée du carburant (36) étant prévue dans le fond de la cuvette.

12. Véhicule selon la revendication 11, caractérisé en ce que l'ouverture d'entrée du carburant (36) de la portion intérieure (28) du goulot de remplissage (21) est dimensionnée de manière, en cours d'utilisation, à accueillir un bec de remplissage du carburant étroitement ajusté et relié à un réservoir à carburant.

13. Véhicule selon l'une quelconque des revendications 7 à 12, caractérisé en ce que la paroi latérale de la portion intérieure (28) du goulot de remplissage (21) est dotée au moins d'une ouverture d'aération (35) à travers laquelle l'air expulsé du réservoir à carburant (17) lors du remplissage de ce dernier au moyen de carburant peut s'écouler.

14. Véhicule selon la revendication 13, caractérisé en ce que l'ouverture ou au moins l'une des ouvertures d'aération (35) dans la portion intérieure (28) du goulot de remplissage (21) est dimensionnée de manière, en cours d'utilisation, à accueillir un bec de remplissage du carburant étroitement ajusté d'un tuyau à carburant relié au réservoir à carburant.
